(19) Europäisches Patentamt
European Patent Office
Office européen des brevets

(11) **EP 4 071 654 A1**

(12) **EUROPÄISCHE PATENTANMELDUNG**

(43) Veröffentlichungstag:
**12.10.2022 Patentblatt 2022/41**

(21) Anmeldenummer: **21167507.9**

(22) Anmeldetag: **08.04.2021**

(51) Internationale Patentklassifikation (IPC):
*G06F 30/20* (2020.01)      *G06F 17/18* (2006.01)
*G06Q 10/04* (2012.01)      *G06F 111/08* (2020.01)
*G06F 113/04* (2020.01)

(52) Gemeinsame Patentklassifikation (CPC):
**G06F 30/20; G06N 3/00; G06Q 10/04;**
G06F 2111/08; G06F 2113/04

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder:
• **Deutsche Telekom AG
53113 Bonn (DE)**
• **Friedrich-Alexander-Universität
Erlangen-Nürnberg
91054 Erlangen (DE)**

(72) Erfinder:
• **LEHMANN, Heiko
12587 Berlin (DE)**
• **PÖSCHEL, Thorsten
90491 Nürnberg (DE)**
• **Mühlbauer, Sebastian
93466 Chmerau (DE)**
• **Müller, Patrick
90562 Kalchreuth (DE)**
• **Blank, Michael
96050 Bamberg (DE)**

(74) Vertreter: **Braun-Dullaeus Pannen Emmerling
Patent- & Rechtsanwaltspartnerschaft mbB
Platz der Ideen 2
40476 Düsseldorf (DE)**

(54) **VERFAHREN SOWIE EIN GRAPHEN-GENERATOR ZUM ERZEUGEN EINES GRAPHEN DER BEZIEHUNGEN ZWISCHEN OBJEKTEN IN NETZWERKEN BESCHREIBT**

(57)      Techniken zum Erzeugen eines Graphen, wobei der erzeugte Graph Verbindungen, insbesondere logische Verbindungen, zwischen Objekten abbildet, umfassend folgende Schritte:

• Bereitstellen einer Recheneinheit mit einem Prozessor, geeignet zur Ausführung eines Algorithmus zur Erzeugung eines Graphen, wobei der Algorithmus auf der Recheneinheit implementiert ist;
• Übergabe folgender Input-Daten an den Algorithmus:
o ein erstes Ausgangsmodell eines Graphen;
o eine erste Zielverteilung der Objekte des Graphen zu einem Zeitpunkt $T_n$, wobei die erste Zielverteilung erste Eigenschaften der Objekte repräsentiert;
o einen Grenzwert GW als Abbruchkriterium beim Vergleichen von Zielverteilungen;

• Durchführen der folgenden Schritte durch den Algorithmus:
o Berechnung einer temporären Verteilung der Objekte basierend auf dem Ausgangsmodell des Graphen;
o Vergleichen der temporären Verteilung und der ersten Zielverteilung und Berechnen eines Wertes J, wobei der Wert D einen Differenzwert der temporären Verteilung und der ersten Zielverteilung quantifiziert;

• Ausgabe des Ausgangsmodells des Graphen als erzeugter Graph G($T_n$), falls der Wert J den vorgegeben Grenzwert GW unterschreitet, andernfalls Abändern des Ausgangsmodells des Graphen und wiederholtes Durchführen der vorgenannten Schritte durch den Algorithmus.

Fig. 2

**Beschreibung**

Die Erfindung betrifft ein Verfahren, einen Graphen-Generator zum Erzeugen eines Graphen sowie ein Computersystem auf welchem der erzeugte Graph simuliert werden kann.

In der heutigen Welt findet eine fortschreitende Vernetzung sowohl auf technischen Gebieten als auch zwischen Menschen statt. Ein bekanntes Beispiel ist das Internet, das eine sehr große Zahl an Recheneinheiten zu einem Netzwerk zusammenfasst. Hierbei ist zudem zu erwarten, dass diese Verbindungen der einzelnen Recheneinheiten in Netzwerken zueinander stetig komplexer werden. Sowohl in technischen als auch menschlichen Netzwerken können die Netzwerkteilnehmer, auch Objekte oder Knoten genannt, auf die jeweils anderen Objekte Wirkungen ausüben. Diese Wirkungen können prinzipiell von Vorteil aber auch von Nachteil für die einzelnen Objekte, respektive für das Netzwerk als Ganzes sein. Beispiele für Ausbreitungen mit negativer Wirkung innerhalb solcher Netzwerke sind beispielsweise i) Epidemien, die von Mensch zu Mensch übertragen werden können, sofern ein Kontakt zwischen den Menschen hergestellt wird oder ii) Schadsoftware, die innerhalb eines Computernetzes von einer Rechnereinheit zu einer anderen Recheneinheit übertragen werden und dabei jeweils Schaden verursacht und im schlimmsten Fall das gesamte Netzwerk lahmlegen kann. Würde beispielsweise im Rahmen einer solchen "Kettenreaktion" Stromnetze lahmgelegt werden, könnte dies im schlimmsten Fall etliche Menschenleben kosten.

Um Zusammenhänge, respektive Beziehungen der jeweiligen Objekte innerhalb eines Netzwerks beschreiben zu können, können sogenannte Graphen verwendet werden.

Ein Graph ist in der Graphentheorie eine abstrakte Struktur, die eine Menge von Objekten zusammen mit den zwischen diesen Objekten bestehenden Verbindungen repräsentiert. Die mathematischen Abstraktionen der Objekte werden dabei Knoten (auch Ecken) des Graphen genannt. Die paarweisen Verbindungen zwischen Knoten heißen Kanten (manchmal auch Bögen). Die Kanten können gerichtet oder ungerichtet sein. Häufig werden Graphen anschaulich gezeichnet, indem die Knoten durch Punkte und die Kanten durch Linien dargestellt werden.

Anschauliche Beispiele für Graphen sind ein Stammbaum oder das U-Bahn-Netz einer Stadt. Bei einem Stammbaum stellt jeder Knoten ein Familienmitglied dar und jede Kante ist eine Verbindung zwischen einem Elternteil und einem Kind. In einem U-Bahn-Netz stellt jeder Knoten eine U-Bahn-Station dar und jede Kante eine direkte Zugverbindung zwischen zwei Stationen.

Die Kenntnis eines solchen Graphen kann es nun also ermöglichen geeignete Maßnahmen zu ergreifen, sodass den Auswirkungen von Störungen durch geeignete Maßnahmen entgegengetreten werden kann.

Allerdings ist die modellhafte Verfügbarkeit solcher Graphen aus unterschiedlichen Gründen stark eingeschränkt, sodass in den meisten Fällen gar keine Graphen für die entsprechenden Netzwerke vorhanden sind. Vor allem soziale Graphen sind in der Regel aufgrund ihrer Komplexität - im Gegensetz zu einfachen Graphen (z.B. U-Bahn-Netze) - unbekannt.

Demnach ist es die Aufgabe der Erfindung, ein Verfahren sowie einen Graphen-Generator anzugeben, mit dem ein entsprechender Graph für die Modellierung eines Netzwerkes, insbesondere künstlich, erzeugt werden kann. Es ist eine weitere Aufgabe der Erfindung ein Computernetzwerk anzugeben, mit dem, basierend auf dem erzeugten Graph, Simulationen von realen Anwendungsfällen durchgeführt werden können.

Gelöst wird diese Aufgabe mit den Merkmalen der unabhängigen Ansprüche.

Die Merkmale der im Folgenden beschriebenen verschiedenen Aspekte der Erfindung bzw. der verschiedenen Ausführungsbeispiele sind miteinander kombinierbar, sofern dies nicht explizit ausgeschlossen ist oder sich technisch zwingend ausschließt.

Erfindungsgemäß ist ein zum Erzeugen eines Graphen angegeben, wobei der erzeugte Graph Verbindungen, insbesondere logische Verbindungen, zwischen Objekten abbildet. Hierbei kann der Graph insbesondere Verbindungen zwischen realen Objekten abbilden. Das Verfahren fasst folgende Schritte:

- Bereitstellen einer Recheneinheit mit einem Prozessor, geeignet zur Ausführung eines Algorithmus zur Erzeugung eines Graphen, wobei der Algorithmus auf der Recheneinheit implementiert ist;
- Übergabe folgender Input-Daten an den Algorithmus:

  ○ ein erstes Ausgangsmodell eines Graphen;
  ▪ hierbei gibt es prinzipiell eine große Gestaltungsfreiheit bei der Wahl des ersten Ausgangsmodells für den Graphen. Insbesondere kann es sich hierbei um einen heuristisch erzeugten Graphen handeln. Die Anzahl der Objekte ist vorzugsweise in der Größenordnung der Anzahl der entsprechenden realen Objekte. Die Anzahl der realen Objekte ist in der Regel a priori deutlich einfacher zu bestimmen als Verbindungen zwischen den Objekten. Beispielsweise kann die Anzahl von Computern, die Menschen in einem bestimmten räumlichen Gebiet verwenden, relativ genau abgeschätzt werden. Unter Umständen kann eine solche Abschätzung der Basis von IP-Adressen durch einen Netzwerkprovider vorgenommen werden.
  ○ eine erste Zielverteilung der Objekte des Graphen zu einem Zeitpunkt $T_n$, wobei die erste Zielverteilung erste Eigenschaften der Objekte repräsentiert;

▪ hierbei kann es sich beispielsweise um eine statistische Zielverteilung handeln, die ermittelt werden kann, um die Eigenschaften der Objekte zu repräsentieren. Beispiele für eine solche Zielverteilung können sein: Häufigkeitsverteilungen oder auch räumliche Verteilungen. Beispielsweise kann die statistische räumliche Verteilung von Rechnern in einem Netzwerk relativ einfach ermittelt werden. Im Allgemeinen gilt, dass eine Zielverteilung sich über die Zeit hinweg verändern kann, sodass zusätzlich der Zeitpunkt $T_n$ bekannt sein sollte. Zwischen einem Graphen der Objekte und einer zugeordneten Zielverteilung gilt, dass sich die Zielverteilung aus dem Graphen ergibt und umgekehrt.

∘ einen Grenzwert GW als Abbruchkriterium beim Vergleichen von Zielverteilungen;

▪ hierbei handelt es sich lediglich um einen mathematisch festgelegten Grenzwert, der je nach Anwendungsfall verschiedenartig gewählt werden kann, um ein härteres oder ein schwächeres Abbruchkriterium zu erzeugen.

• Durchführen der folgenden Schritte durch den Algorithmus:

∘ Berechnung einer temporären Verteilung der Objekte basierend auf dem Ausgangsmodell des Graphen;
▪ aus dem Ausgangsmodell des Graphen wird also die hieraus resultierende Verteilung berechnet.

∘ Vergleichen der temporären Verteilung und der ersten Zielverteilung und Berechnen eines Wertes J, wobei der Wert J einen Differenzwert der temporären Verteilung und der ersten Zielverteilung quantifiziert;
▪ hierbei können die Verteilungen mit geeignet gewählten mathematischen Methoden verglichen werden. Insbesondere werden solche mathematischen Methoden ausgewählt, die den Vergleich der temporären Verteilung der ersten Zielverteilung auf einen quantifizierbaren Wert reduzieren.

∘ Ausgabe des Ausgangsmodells des Graphen als erzeugter Graph $G(T_n)$, falls der Wert J den vorgegeben Grenzwert GW unterschreitet, andernfalls Abändern des Ausgangsmodells des Graphen und wiederholtes Durchführen der vorgenannten Schritte durch den Algorithmus.
▪ Entspricht das Ausgangsmodell des Graphen, respektive die hieraus errechnete temporäre Verteilung, also mit zufriedenstellender Genauigkeit der ersten Zielverteilung, so kann der Algorithmus abgebrochen werden und das Ausgangsmodell des Graphen als erzeugter Graph zum Zeitpunkt $T_n$ ausgegeben werden. Unter Umständen ist allerdings eine Vielzahl von Iterationen nötig, bis das Ausgangsmodell des Graphen mit zufriedenstellender Genauigkeit der ersten Zielverteilung entspricht. Unter dem Begriff Abändern des Ausgangsmodells ist zu verstehen, dass der Name der Variable Ausgangsmodell in dem Programmcode zwar beibehalten wird, dass durch die erzeugten Abänderungen aber das Ausgangsmodell des Graphen schon nach der ersten Iteration im allgemeinen nicht mehr dem Ausgangsmodell des Graphen entspricht, der als Input an den Algorithmus übergeben wurde.

Das Verfahren ermöglicht es also in vorteilhafter Weise, einen komplexen Graphen, der Beziehungen zwischen realen Objekten zu einem Zeitpunkt $T_n$ abbildet, lediglich basierend auf einer relativ einfach zu bestimmenden Zielverteilung zum Zeitpunkt $T_n$ zu synthetisieren. Hierdurch wird es möglich, in zuvor nicht bekannter Art und Weise, Einsichten in Beziehungen zwischen Objekten innerhalb eines Netzwerks zu erlangen. Die einzige Beschränkung, die es hinsichtlich einer Skalierbarkeit der zu betrachtende Netzwerke gibt, ist durch die vorhandenen Computerressourcen gegeben. Bei den gegenwärtig verfügbaren Computerressourcen ist allerdings zu erwarten, dass prinzipiell alle real vorkommenden Netzwerke realisierbar sind. Je nachdem wie dynamisch ein solches Netzwerk ist, erlaubt die Bestimmung des Graphen zum Zeitpunkt $T_n$ auch schon näherungsweise ohne größeren Aufwand eine Approximation des Graphen zu früheren $T_{n-1}$ oder späteren Zeitpunkten $T_{n+1}$ ohne dass hierfür weitere Algorithmen verwendet werden müssen. Im einfachsten Fall gilt also für wenig dynamische Graphen $G(T_n)= G(T_{n+1})=G(T_n-1)$.

Bevorzugt wird das Ausgangsmodell basierend auf einem geeigneten Optimierungsalgorithmus abgeändert, indem Kanten zwischen den Objekten verschoben werden, zufällige Verbindungen zwischen Objekten erzeugt und/oder zufällige Verbindungen zwischen den Objekten gelöscht werden.

Jede dieser Änderungen erzeugt einen anderen Graphen, der wiederum in einer anderen temporären Verteilung resultiert. Der Optimierungsalgorithmus ist so eingerichtet, dass der Wert J im Mittel immer kleiner wird. Allerdings ist es durchaus zulässig, dass der Wert J kleineren Schwankungen unterliegt, also insbesondere auch kurzzeitig größer werden kann, da a priori nicht klar ist, welche der vorstehend genannten Maßnahmen, und gegebenenfalls auch deren Kombination, zu einer Erhöhung oder Erniedrigung des Wertes J führt. Für diese Art von Problemen ist es von Vorteil Optimierungsverfahren zur Bestimmung globaler Minima einer Potenziallandschaft zu verwenden. Beispielsweise bietet das sogenannte Simulated Annealing Verfahren eine bevorzugte Möglichkeit, um das Ausgangsmodell geeignet zu optimieren.

Zweckmäßigerweise ist der Algorithmus eingerichtet Graphen zu früheren Zeitpunkten $G(T_{n-i})$, insbesondere

einen Graphen $G(T_0)$ zum Zeitpunkt T=0, und/oder zu späteren Zeitpunkten $G(T_{n+i})$ basierend auf dem erzeugten Graph $G(T_n)$ zu simulieren.

Dies bietet den Vorteil, dass auch dynamische Graphen G bezüglich ihrer Ausgestaltung zu verschiedenen Zeiten berechnet werden können. Eine Voraussetzung für die Berechnung des Graphen zu verschiedenen Zeitpunkten ist hierbei allerdings, dass die gegebenen Randbedingungen im Idealfall gleichbleiben, bzw. zu verschiedenen Zeiten nicht zu sehr voneinander abweichen. Beispielsweise kann der Graph zum Zeitpunkt T=0, also der Ursprung eines Ereignisses, zweckmäßigerweise so ermittelt werden, dass für das zentrale Objekt die Varianz der Häufigkeitsverteilung minimal ist, wenn man die Annahme zugrunde legt, dass sich die Ereignisse in einer Metrik des Graphen isotrop ausbreiten.

In einer bevorzugten Ausgestaltung wird dem Algorithmus zumindest eine zweite Zielverteilung übergeben, wobei die zweite Zielverteilung zweite Eigenschaften der Objekte repräsentiert und wobei der Graph durch den Algorithmus basierend auf beiden Zielverteilungen angepasst wird.

Wird ein Netzwerk mithin durch mehr als eine einzige Eigenschaft zwischen den Objekten gekennzeichnet, genügt eine einzige Zielverteilung, die lediglich eine Eigenschaft der Objekte beschreibt, in der Regel nicht aus, um einen Graphen zu erzeugen, der zufriedenstellend genau ist. Auf vorteilhafte Weise wird durch die zusätzlichen Informationen der zweiten Zielverteilung also ermöglicht, dass der erzeugte Graph noch besser das reale Netzwerk wiedergeben kann, wobei insbesondere für komplexere Netzwerke zwei oder noch mehr Zielverteilungen als Input bessere Resultate liefern.

In einer Ausführungsform können basierend auf dem erzeugten Graph $G(T_n)$, insbesondere für verschiedene Zeiten, Dynamiken und/oder Ist-Zustände für folgende reale Anwendungsfälle simuliert werden. Insbesondere können reale Anwendungsfälle simuliert werden, wenn diese in diskreten Ausbreitungsräumen stattfinden. Eine nicht abschließende Liste von realen Anwendungsfällen in diskreten Ausbreitungsräumen sind:

- Ausbreitungsmuster von Infektionen bei Lebewesen;
  ◦ auf diese Weise wird ermöglicht, dass sowohl der Ursprung einer Infektion als auch die Ausbreitung dieser Infektion, beispielsweise wie bei der zurzeit herrschenden Covid Pandemie, simuliert werden können.
- Ausbreitungsmuster von Schadsoftware bei Recheneinheiten;
  ◦ auf diese Weise kann ermittelt werden, wie sich ein Computervirus innerhalb eines Computernetzwerks ausbreitet und wann welche Rechner gegebenenfalls gefährdet sind. Zusätzlich kann simuliert werden, von welchem Rechner der Virus ursprünglich ausgegangen ist.
- Ausbreitungsmuster von Internetinhalten;
  ◦ vor allem in sozialen Netzwerken wurde in letzter Zeit das Phänomen der Internethetze bekannt. Die Simulation ermöglicht es nun zu bestimmen, wie sich Nachrichten Meinungen und dergleichen im Netz ausbreiten, aber auch woher sie stammen. Gegebenenfalls können als Gegenmaßnahmen entsprechende Rechner gesperrt werden.
- Ausbreitungsmuster von Marketingmaßnahmen;
  ◦ die Simulation von Ausbreitungsmuster von Marketingmaßnahmen ermöglicht es Unternehmen zu quantifizieren, welche Personengruppen durch die Maßnahmen erreicht werden.
- Robustheit von Netzwerken und/oder
  ◦ die Simulation der Robustheit von Netzwerken ermöglicht beispielsweise im Falle von Stromnetzwerken eine Simulation, wie sicher die entsprechenden Netzwerke gegenüber Ausfällen einzelner Komponenten sind. Ist nämlich ein Graph bekannt, so kann simuliert werden, wie sich der Ausfall eines der Objekte des Graphen bzw. der Ausfall einer Verbindung zwischen den Objekten auf die anderen Objekte auswirkt. Es können also insbesondere Störungen und deren Auswirkung auf das Netzwerk simuliert werden.
- Supply Chains in Versorgungsnetzwerken.
  ◦ Supply Chains können in analoger Weise wie die Robustheit von Netzwerken simuliert und ausgewertet werden.

Vorzugsweise repräsentiert eine Zielverteilung einen bestimmten Anwendungsfall. Insbesondere repräsentiert die Zielverteilung einen bestimmten realen Anwendungsfall. Für die vorgenannten realen Anwendungsfälle folgt hieraus, dass beispielsweise Ausbreitungsmuster von Schadsoftware, Robustheit von Netzwerken, Supply Chains und/oder Ausbreitungsmuster von Infektionen jeweils spezifische Zielverteilungen zugeordnet sind. Hierdurch wird in vorteilhafter Weise ermöglicht, dass die erzeugten Graphen möglichst nahe an die realen Netzwerke heranreichen.

In einer Ausführungsform repräsentiert das Ausgangsmodell des Graphen einen gerichteten Graphen. Gerichtete Graphen können dadurch gekennzeichnet sein, dass Richtungspfeile zwischen den einzelnen Objekten vorgegeben sind, die die Ausbreitungsrichtung eines Ereignisses repräsentieren. Durch die zusätzliche Information der Richtung in der sich Ereignisse ausbreiten können, ist es möglich Dynamiken in den Netzwerken noch besser zu simulieren. Bei ungerichteten Graphen ist prinzipiell eine Ausbreitung von Ereignissen sowohl von Objekt A zu Objekt B als auch von Objekt B zu Objekt A möglich.

In einer bevorzugten Ausführungsform wird das Ausgangsmodell des Graphen durch einen Multigraphen repräsentiert. Unter einem Multigraph versteht man, dass von einem Objekt mehrere Verbindungen zu einem anderen Objekt führen können. Hierbei kann jeder Verbindung ein anderes Ereignis zugeordnet werden, sodass hierdurch in vorteilhafter Weise simuliert werden kann, falls ein Objekt auf verschiedene Art und Weise auf ein anderes Objekt wirkt. Beispielsweise könnten auf diese Art und Weise der parallele Verlauf von mehreren Infektionskrankheiten in einem Netzwerk simuliert werden. Hierbei würde einer ersten Infektionskrankheit eine erste Verbindung und einer zweiten Infektionskrankheit eine zweite Verbindung zwischen den Objekten zugeordnet werden. Da im Allgemeinen verschiedene Infektionskrankheiten verschiedenartig infektiös sind, wird durch die vorgenannten Merkmale eine geeignete Simulation dieses Falls ermöglicht. Ein anderer Anwendungsfall wäre eine Ausbreitung von mehreren verschiedenartigen Computerviren in einem Computernetzwerk.

Vorzugsweise wird dem Algorithmus ein weiteres Ausgangsmodell eines Graphen übergeben, wobei die verschiedenen Ausgangsmodelle im Hinblick auf ihre Übereistimmung mit der Zielverteilung quantifiziert werden, und dass das Ausgangsmodell mit der besseren Übereinstimmung als bevorzugtes Ausgangsmodell für die Zielverteilung markiert wird. Insbesondere gibt es für jeden Anwendungsfall spezifische bevorzugte Ausgangsmodelle.

Dies ergibt den Vorteil, dass berechnet werden kann, welches Ausgangsmodell sich besser eignet und im Normalfall schneller mit der Zielverteilung konvergiert. Diese Analyse ermöglicht zudem vorteilhaft zu bestimmen, ob bestimmte Ausgangsmodelle für verschiedene der vorgenannten realen Anwendungsfälle besonders gut geeignet sind. Auf diese Art und Weise können also nicht nur die erzeugten Graphen, sondern auch die Ausgangsmodelle optimiert werden, sodass in zukünftigen Simulationen schon eine Vorauswahl an besonders geeigneten Ausgangsmodellen vorliegt. Insbesondere kann der Fall eintreten, dass ein Ausgangsmodell, das für ein Computernetzwerk besonders gut geeignet ist, sich als für ein Infektionsnetzwerk als ungeeignet herausstellt.

In eine Ausführungsform wird die Übereinstimmung im Hinblick auf eine Zusammenschau der Übereinstimmung der bekannten Zielverteilung zu verschiedenen Zeitpunkten ermittelt.

Dies ist insbesondere dann vorteilhaft, wenn das zugrundeliegende Netzwerk eine Dynamik aufweist. Ein Falsifizieren der Ergebnisse anhand von realen Ausbreitungskarten der Netzwerke, respektive der zugrunde liegenden Zielverteilungen zu verschiedenen Zeitpunkten, ermöglicht es, die temporäre Zielverteilung anhand einer zeitlichen Serie von Daten zu überprüfen. Der Optimierungsalgorithmus zielt dann darauf ab, einen Graph zu erzeugen, der im Mittel möglichst wenig von einer Gesamtschau aller Ausbreitungskarten dieser zeitlichen Serie abweicht. Unter Umständen weist ein solch optimierter Graph sogar eine schlechtere Übereinstimmung zu einer der Zielverteilungen der verschiedenen Zeitpunkte auf als ein anderer Graph, wird aber trotzdem als der erzeugte Graph ausgewählt, da er in der Gesamtschau eine minimale Abweichung aufweist.

Gemäß einem zweiten Aspekt der Erfindung ist eine Verwendung des erzeugten Graphen zur Simulation von Dynamiken und/oder Ist-Zuständen für folgende reale Anwendungsfälle angegeben, insbesondere bei realen Anwendungsfälle in diskreten Ausbreitungsräumen, auf einem Computersystem. Die Liste der Anwendungsfälle ist nicht abschließend:

- Ausbreitungsmuster von Infektionen bei Lebewesen;

- Ausbreitungsmuster von Schadsoftware bei Rech. eneinheiten;

- Ausbreitungsmuster von Internetinhalten;

- Ausbreitungsmuster von Marketingmaßnahmen;

- Robustheit von Netzwerken und/oder

- Supply Chains in Versorgungsnetzwerken.

Einzelheiten im Zusammenhang mit den verschiedenen Anwendungsfällen wurden bereits vorstehend im Zusammenhang mit dem ersten Aspekt der Erfindung erläutert und sollen hier aus Effizienzgründen nicht nochmals wiederholt werden.

Gemäß einem dritten Aspekt der Erfindung ist ein Graphen-Generator zur Erzeugung eines Graphen angegeben. In einer möglichen Ausführungsform umfasst der Graphen-Generator eine Rechnereinheit und einen Prozessor, wobei auf dem Prozessor der vorstehend beschriebene Algorithmus zur Erzeugung des Graphen implementiert ist. Der Graphen-Generator ist eingerichtet zur Ausführung des vorstehend beschriebenen Verfahrens.

Dies bietet den Vorteil, dass mittels des Graphen-Generators der Graph auf technischem Wege zumindest teilweise automatisiert erzeugt werden kann. Vorzugsweise weist der Graphen-Generator eine Speichereinheit auf in der der erzeugte Graph abgespeichert werden kann.

Gemäß einem vierten Aspekt der Erfindung ist ein Computersystem zur Simulation von Dynamiken und/oder Ist-Zustände von Netzwerken angegeben, wobei das Computersystem folgendes umfasst:

- den vorstehend beschriebenen Graphen-Generator;
- einen Eingangskanal zum Übermitteln von Input-Daten, insbesondere von Zielverteilungen, an das Computersystem,
- einen Ausgabekanal zur Ausgabe des durch den Graphen-Generator erzeugten Graphen,

wobei das Computersystem zur Ausführung des vorstehend beschriebenen Verfahrens eingerichtet ist und zudem eingerichtet ist, den erzeugten Graphen auszugeben und/oder mittels des erzeugten Graphen Dynamiken und/oder Ist-Zustände von Netzwerken zu simulieren.

Das Computersystem kann beispielsweise ein Server, ein Computer oder auch eine mobile Rechnereinheit sein.

Die Ausgabe des erzeugten Graphen durch das Computersystem bietet den Vorteil, dass der erzeugte Graph über den Ausgangskanal insbesondere anderen Nutzern, respektive deren Computersystem verfügbar gemacht werden kann. Diese Nutzer sind dann in der Lage mit dem an sie übertragenen erzeugten Graphen Simulationen realer Anwendungsfälle durchzuführen. Zusätzlich oder alternativ können aber auch auf dem Computersystem schon die entsprechenden Simulationen der realen Anwendungsfälle, insbesondere der vorstehend beschriebenen realen Anwendungsfälle, durchgeführt werden. Die Simulationen sind also in der Lage Ist-Zustände der Netzwerke zu beschreiben, aber auch Dynamiken zu simulieren. So kann beispielsweise ermittelt werden, von welchem Objekt eine Schadsoftware/Infektion ursprünglich ausgegangen ist und wie sie sich verbreitet. Dies alles erlaubt beispielsweise Netzwerkadministratoren wertvolle Einblicke in das "Innere" dieser Netzwerke. Epidemiologen können die Ausbreitung von Infektionskrankheiten effektiv simulieren und nachvollziehen. Aufgrund dieser Simulationen können (durch Administratoren oder auch automatisiert) Entscheidungen getroffen werden, die das weitere Verhalten der Netzwerke beeinflusst.

In einer Ausführungsform ist das Computersystem eingerichtet bei der Simulation kritische Zustände für verschiedene Anwendungsfälle, insbesondere in diskreten Ausbreitungsräumen, des Graphen zu detektieren, solche Anwendungsfälle umfassen:

- Ausbreitungsmuster von Infektionen bei Lebewesen;

- Ausbreitungsmuster von Schadsoftware bei Recheneinheiten;

- Ausbreitungsmuster von Internetinhalten;

- Ausbreitungsmuster von Marketingmaßnahmen;

- Robustheit von Netzwerken und/oder

- Supply Chains in Versorgungsnetzwerken.

Hierzu können dem Computersystem von Administratoren Kriterien bereitgestellt werden, die auf kritische Zustände in den jeweiligen Netzwerken hinweisen. Diese Kriterien sind im Allgemeinen für die jeweiligen Anwendungsfälle verschieden. Anhand dieser Kriterien kann das Computersystem mit einem Vergleich ermitteln, ob kritische Zustände für die verschiedenen Anwendungsfälle vorliegen. Dies bietet den Vorteil, dass durch die Simulationen automatisiert festgestellt werden kann, ob sich die entsprechenden Netzwerke in einem kritischen Zustand befinden. Bei Infektionen könnte dies bedeuten, dass die Zahl der infizierten Lebewesen zu hoch ist und/oder sich die Infektion zu schnell ausbreitet. Bei Schadsoftware könnte dies bedeuten wie viele Computer sich innerhalb einer bestimmten Zeit mit einem bestimmten Virus infizieren und welche Auswirkungen das beispielsweise für IT einzelner Firmen hätte. Bei der Robustheit von Netzwerken, insbesondere von Netzwerken der Stromversorgung, ob in einem bestimmten Gebiet die Gefahr eines Stromausfalls gegeben ist. Bei Supply Chains, ob eine Produktion aufrechterhalten werden kann, wenn beispielsweise ein Zulieferer ausfällt.

Diese kritischen Zustände können an den entsprechenden Netzwerkadministrator, beispielsweise über den Ausgangskanal direkt an dessen Smartphone, übermittelt werden, sodass dieser entsprechend Maßnahmen ergreifen kann, um die Netzwerke zu stabilisieren.

In vorteilhafter Weise können auch die Auswirkungen solcher Maßnahmen simuliert werden. Beispielsweise könnte es zur Verhinderung der Ausbreitung von Schadsoftware oder Infektionen notwendig sein, Verbindungen zwischen den Objekten quasi zu "unterbinden". Ein solches Unterbinden kann wiederum innerhalb des erzeugten Graphen dadurch simuliert werden, dass Verbindungen entfernt werden, sodass ein "neuer" angepasster Graph entsteht. Mit diesem neuen angepassten Graph können wiederum Simulationen durchgeführt werden, der die Auswirkungen der Maßnahmen simuliert. Dies erlaubt quasi einen Blick in die Zukunft wie die Maßnahmen wirken werden, sodass Maßnahmen nicht mehr wie so häufig "einen blinden Fleck" bezüglich möglicher Auswirkungen in der Zukunft aufweisen. Bei Supply Chains könnte es eine wirksame Maßnahme sein, zusätzliche Objekte und zusätzliche Verbindungen einzuführen, die quasi einen neuen Lieferanten für bestimmte Güter repräsentieren. Die entsprechenden Simulationen können zeigen, welches Kosten-Nutzen-Verhältnis für einen Hersteller folgt, wenn dieser einen neuen Lieferanten in das Netzwerk aufnehmen würde. Vorzugsweise ergreift das Computersystem, das in ein Netzwerk eingebunden ist, beim Erkennen der kritischen Zustände technische Maßnahmen, um eine Funktionstüchtigkeit der verschiedenen Anwendungsfälle sicherzustellen. Dies ist vor allem dann vorteilhaft, wenn automatisiert schnell gehandelt werden muss, um die Funktionstüchtigkeit eines Netzwerks zu gewährleisten.

Im Folgenden werden bevorzugte Ausführungsbeispiele der vorliegenden Erfindung unter Bezugnahme auf die begleitenden Figuren erläutert:

Fig. 1:     zeigt eine Zielverteilung als Input für den Algorithmus am konkreten Beispiel einer Häufigkeitsverteilung.

Fig. 2:     zeigt ein Flussdiagramm des Algorithmus zum Erzeugen des Graphen.

Fig. 3:     zeigt ein Netzwerk von Recheneinheiten, wobei der Algorithmus zum erzeugen des Graphen auf einer der Recheneinheiten implementiert ist.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

Zunächst werden zwei verschiedene Anwendungsbeispiele der Erfindung anhand des Anwendungsfall einer Infektionskrankheit beschrieben. Prinzipiell sind diese Beispiele auch für die anderen vorstehend beschriebenen Anwendungsfälle anwendbar. Beispielsweise könnten im Anwendungsfall von Schadsoftware quasi 1:1 Infektionen durch Schadsoftware und Menschen durch Rechner ersetzt werden.

Erster Anwendungsfall. Vorhersage der Ausbreitung einer Epidemie:

Epidemien werden in einem Netzwerk durch Menschen von Wirt zu Wirt übertragen, sofern ein Kontakt zwischen den Wirten hergestellt wird. In diesem konkreten Fall entspricht der Wirt also dem "abstrakten" Objekt des Graphen. Ein Kontakt bedeutet im Falle von Krankheiten in der Regel einen physischen Kontakt zwischen den Wirten und bei Schadsoftware ein Datenaustausch zwischen den Recheneinheiten.

In beiden Fällen kann der Weg der Übertragung durch entsprechende Graphen beschrieben werden. Dabei ist in beiden Fällen nicht die Existenz einer Verbindung ausschlaggebend, also ein real existierender Weg zwischen Häusern, in denen Wirte leben oder eine Internetverbindung zwischen den Recheneinheiten, sondern der tatsächliche Austausch, respektive die tatsächliche Ausbreitung. Die reine Existenz eines Wegs bzw. einer Internetverbindung bewirkt noch keine Infektion. Dieser Weg muss nämlich auch von der Infektion bzw. von der Schadsoftware tatsächlich beschritten werden. Ein Mensch muss also tatsächlich in Kontakt mit einem anderen Menschen geraten und Schadsoftware muss tatsächlich von einer Rechnereinheit auf eine andere übertragen werden. Somit beschreibt der Graph keine physische Verbindung, sondern eine logische.

Solche Graphen, die Computernetzwerke oder Netzwerke von Menschen beschreiben, sind allerdings in den meisten praktischen Fällen unbekannt und nur sehr schwer direkt zu ermitteln. Dies heißt konkret, dass unbekannt ist, welche Menschen sich auf den Wegen treffen oder welche Software zwischen den Computern ausgetauscht wird. Eine Kenntnis dieser Graphen ist jedoch notwendig, wenn die weitere Ausbreitung von einem gegebenen Zustand aus vorhergesagt, respektive simuliert werden soll. Im Gegensatz zu den Graphen ist es allerdings meist möglich bestimmte statistische Eigenschaften der Objekte zueinander zu bestimmen. Unter Umständen sind diese Eigenschaften sogar schon bekannt.

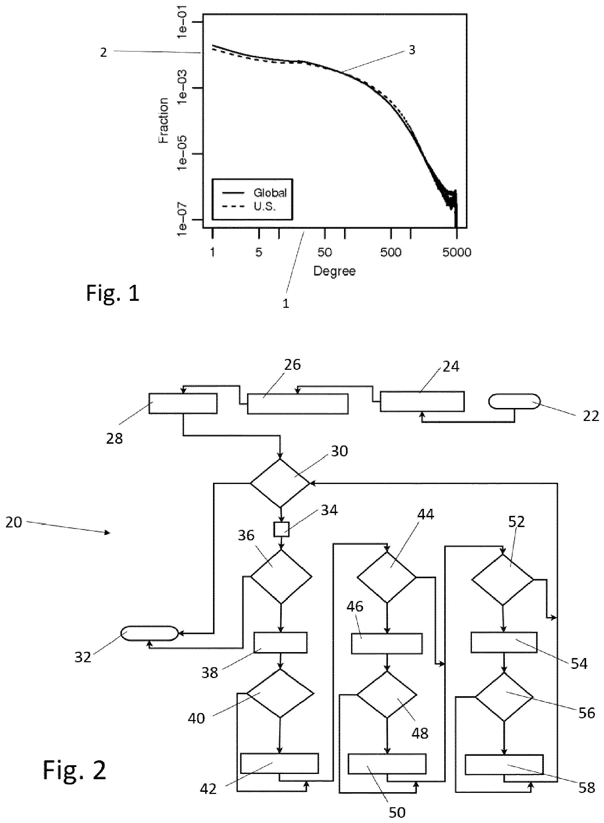

Als konkretes Beispiel für das Netzwerk von Menschen: Es ist in der Regel unbekannt, wer wessen Facebook-Seite besucht. Dieser Fall ist analog zu dem a priori unbekannten Graphen. Bekannt ist allerdings, und dies entspricht einer statistischen Zielverteilung, wie viele Freunde/Follower ein Nutzer im Durchschnitt hat. Es ist sogar die Häufigkeitsverteilung bekannt, eine bestimmte Anzahl von Freunden zu haben, wie Fig. 1 zeigt.

Fig. 1 zeigt eine Häufigkeitsverteilung von Facebook Nutzern im Hinblick auf die Anzahl ihrer Freunde.

Auf der x-Achse 1 ist die Anzahl der Freunde aufgetragen, wohingegen auf der y-Achse die entsprechende relative Häufigkeit aufgetragen ist. Es ist zu sehen, dass die entsprechenden Graphen für die globale Auswertung als auch für die Auswertung von US-Bürgern im Wesentlichen analog verlaufen. Die Häufigkeitsverteilung 3 nimmt von einem Freund bis zu etwa 50 Freunden nur mit einer leichten Steigung ab, wobei ab dem Wert von 50 Freunden die Kurve eine negativ abfallende Schulterform aufweist und etwa bei einem Maximum von 5000 Freunden nahe null ist. Dies kann so interpretiert werden, dass die meisten Facebook Nutzer einen bis 50 Freunde haben und nur ganz vereinzelt einzelne Facebook Nutzer 5000 Freunde aufweisen. Wie nachstehend anhand von Fig. 2 noch gezeigt wird, kann die Zielverteilung verwendet werden, um den dem Netzwerk zugrundeliegenden Graphen zu erzeugen.

Zudem sind als weitere Zielverteilung, statistische Eigenschaften der räumlichen Verteilung von Menschen (zum Beispiel aus der Verteilung der Bevölkerungsdichte) oder auch von Recheneinheiten bekannt oder können extrahiert werden. Im Falle der Ausbreitung von Krankheiten können zudem statistische Zielverteilungen von Eigenschaften wie einer Reiselänge von Wirten bestimmt werden. Unter der Reiselänge von Wirten versteht man zum Beispiel die Länge des Arbeitswegs, Statistiken zu Reisen mit der Bahn, Flugzeug etc. Ebenso können Statistiken zu den Eigenschaften der Kontakte, also zum Beispiel zu den Zeitdauern von dienstlichen Sitzungen, ermittelt werden.

Während also der konkrete Graph unbekannt ist, ist die tatsächliche Ausbreitung der Infektionen oft bekannt. Man kennt also die räumlichen Orte der infizierten Wirte zu bestimmten Zeiten. Aus einer zeitlichen Serie von Karten infizierter Wirte lassen sich Rückschlüsse über den zugrundeliegenden Graphen, respektive das Netzwerk ziehen.

Das erfindungsgemäße Verfahren ermöglicht es also aus statistischen Eigenschaften von Zielverteilungen, den zugrundeliegenden Graphen zu bestimmen, bzw. die Vielfalt möglicher Graphen stark einzugrenzen. Ein durch das erfindungsgemäße Verfahren erzeugter Graph kann verwendet werden um die zeitliche Abfolge des Infektionsgeschehens für die Zukunft vorherzusagen, wobei die Vorhersage desto genauer ist, je weniger sich die Randbedingungen verändern.

Zweiter Anwendungsfall: Auffinden eines Infektionsursprungs (Patient 0; Rechner 0):

Die Beschreibungen im Zusammenhang mit dem ersten Anwendungsfall sind auch bei dem zweiten Anwendungsfall gültig. Sind die Serie der Karten und der Graph bekannt, so kann nicht nur in fortschreitender Zeit gerechnet werden, sondern auch in rückschreitender Zeit - also in Richtung des Ursprungs der Ereignisse. Durch Auswertung der Karten kann jedem infizierten Wirt eine Häufigkeitsverteilung des logischen Abstands zu allen anderen infizierten Wirten zugeordnet werden. Im Unterschied zu einem räumlichen Abstand, beschreibt der logische Abstand die Distanz zweier Wirte auf der Metrik des Graphen. Diese Statistik hat wiederum charakteristische Eigenschaften, zu denen die Varianz gehört. Man kann jenen Wirt, für den die Varianz der Häufigkeitsverteilung minimal ist, den zentralen Wirt nennen. Unter der Annahme, dass sich die Infektion in der Metrik des Graphen isotrop ausbreitet, ist die Fluktuation des Abstandes des zentralen Wirts gegenüber allen anderen Abständen klein. Anschaulich kann man sagen, dass der zentrale Wirt sich also in der Mitte des Netzwerkes befindet. Somit kann der vorstehend beschriebenen Varianz eine Zahl zugeordnet werden, die der Wahrscheinlichkeit entspricht, Ursprung der Epidemie zu sein, also Patient Null.

Diese beiden Beispiele illustrieren, dass die Kenntnis des Graphen wichtige Aussagen von praktischem Nutzen erlaubt. Prinzipiell ist es möglich beliebige reale Anwendungsfälle entsprechend den vorgenannten Ausführungsbeispielen anzuwenden. Die Objekte müssen hierbei lediglich in einem diskreten Netzwerk angeordnet sein.

Im Folgenden gehen wir detaillierter auf die Erzeugung des Graphen ein. Es kann mit einem heuristisch erzeugten Graph als Ausgangsmodell gestartet werden. Dieser wird bevorzugt unter Verwendung eines modifizierten "Simulated Annealing Algorithmus" solange modifiziert bis die aus ihm ergebende Verteilung mit hinreichender Genauigkeit einer dem Algorithmus als Input übergebenen Zielverteilung, wie beispielsweise jener in Fig. 1, entspricht. Hierbei werden Knoten und Verbindungen (auch als Kanten bezeichnet) des Graphen verschoben, gestrichen und erzeugt, mit dem Ziel, die statistischen Eigenschaften des Graphen iterativ an die geforderten Vorgaben (also die Zielverteilung) des Graphen anzupassen. Fig. 2 zeigt schematisch das Flussdiagramm des Algorithmus 20:

Ausgehend von einem zufälligen Netzwerk werden die Knotenverteilungen, Distanzverteilungen und Assortativität berechnen. Diese Daten werden mit "Simulated Annealing" optimiert. Der Algorithmus ist beendet, wenn die Fehlerquadratsumme (RMS) der Abweichung der statistischen Charakteristiken des aktuellen Graphen von den Zielvorgaben konvergiert ist, bzw. einen Grenzwert GW unterscheiden. Der Algorithmus 20 wird nachstehend im Detail beschrieben.

Schritt 22: der Algorithmus 20 wird gestartet.

Schritt 24: dem Algorithmus werden folgende Eingangsparameter übergeben:

- ein Satz von $N$ Objekten, auch als Knoten bezeichnet, wobei die Objekte bezüglich ihrer räumlichen Position $\vec{r_i} \in R^2$ definiert sind;
- ein initialer Satz von $C$ Verbindungen, auch als Kanten bezeichnet, die die $N$ Objekte miteinander verbinden;
- eine Zielgradverteilung $p_d(n)$, also für einen bestimmten Grad $n$ die Wahrscheinlichkeit ein Objekt mit $n$ Verbindungen zu finden;
- eine Ziellängenverteilung $p_e(l)$, also die Wahrscheinlichkeit für eine vorgegebene räumliche Länge $l$ eine Verbindung zwischen zwei Knoten $i$ und $j$ zu finden für die gilt: $|\vec{r_i} - \vec{r_j}| = l$;

Es wird angenommen, dass ein Satz von Verbindungen existiert, der den beiden Zielverteilungen genügt.

Schritt 26: die entsprechenden Datenstrukturen für den Ablauf des Algorithmus 20 werden initialisiert, zum Beispiel NodeList, EdgeList, param ... ;

Schritt 28: ein zufälliges Ausgangsmodell eines Graphen, respektive eines Netzwerks, wird erzeugt.

Schritt 30: der Algorithmus 20 läuft in einer Verzweigung ein, die die maximale Anzahl an Iterationen für den Optimierungsalgorithmus i<param.nMaxIter festlegt. Ist die größer gleich param.nMaxIter wird der Algorithmus 20 in Schritt 32 beendet.

In Schritt 34 wird der Laufparameter i hochgezählt.

In Schritt 36 läuft der Algorithmus 20 in eine Verzweigung ein in der der Graph mit den übergebenen Zielvorgaben verglichen wird.

Hierbei ist folgendes die Zielvorgabe für den Algorithmus 20: die Qualität des Netzwerkes/Graphen wird durch die Berechnung der Fehlerquadratsumme zwischen der Gradverteilung $\tilde{p}_d(n)$ und der Längenverteilungen $\tilde{p}_e(l)$ des "veränderten" Ausgangsmodells des Graphen, respektive des Netzwerks, und der korrespondierenden Zielvorgaben $p_d(n)$ und $p_e(l)$ bestimmt. Hierfür wird $p_d(n)$ mittels einer Anzahl von D Stützpunkten $n_d$ diskretisiert. Zudem wird $p_e(l)$ mittels einer Anzahl von E Stützpunkten $l_e$ diskretisiert. Die korrespondierende "Cost-Funktion $J$" ist wie folgt definiert:

$$J = \frac{1}{N} \sum_{d=1}^{D} [p_d(n_d) - \tilde{p}_d(n_d)]^2 + \frac{1}{C} \sum_{e=1}^{E} [p_e(l_e) - \tilde{p}_e(l_e)]^2$$

Die Aufgabe des Optimierungsalgorithmus ist es nun einen Satz von $C$ Verbindungen zu finden, sodass die "Cost-Funktion $J$" minimiert wird. Hierbei gelten die folgenden Randbedingungen. 1) die Anzahl der Verbindungen C sei konstant; 2) isolierte Objekte sind verboten; 3) zwei Objekte können lediglich durch eine einzige identische Verbindung verbunden sein.

Ist $J$ kleiner oder gleich wie ein vorgegebener Grenzwert GW, so entspricht der Graph mit hinreichender Genauigkeit den Zielvorgaben. Der Graph wird als Output erzeugt und der Algorithmus wird in Schritt 32 beendet.

Ist $J$ größer oder gleich wie der vorgegebene Grenzwert GW, muss der Graph weiter angepasst werden, um sich den Zielverteilungen weiter anzunähern. Zu diesem Zweck durchläuft der Graph ein Optimierungsverfahren, welches in Schritt 38 startet und in Schritt 30 endet.

Bevor konkret auf den Optimierungsalgorithmus eingegangen wird, werden die dem Optimierungsalgorithmus zugrundeliegenden Prinzipien erläutert.

Simulated Annealing wird angewendet, um den optimalen Satz von Verbindungen aufzufinden. Die zugrunde liegende Idee basiert auf den folgenden Schritten:

1. Berechne die "Cost-Function" des aktuellen Netzwerks $J^{\mathrm{cur}}$.

2. Modifizierte die Verbindungen des Netzwerks und berechne eine neue "Cost-Function" des modifizierten Netzwerks $J^{\mathrm{new}}$.

3. Falls gilt $J^{\mathrm{new}} \leq J^{\mathrm{cur}}$, dann akzeptiere die Modifikation, falls nicht, wird die Modifikation nur mit der Wahrscheinlichkeit $exp\left(-\frac{J^{\mathrm{new}} - J^{\mathrm{cur}}}{T_t}\right)$ Akzeptiert, wobei $T_t$ eine monoton abfallende Sequenz der Iterationen t ist.

Konkret wird das "Simulated Annealing" in zwei Schritten angewendet:

1. Optimierung der Gradverteilung: Bis die Kostenfunktion unter den Schwellenwert $\lambda_d$ sinkt, wird Simulated Annealing mit der folgenden Übergangsregel angewendet: Durch Vergleich der aktuellen Gradverteilung $\tilde{p}_d(n)$ mit der entsprechenden Zielfunktion $p_d(n)$ erhält man einen Grad $n^+$, der zu häufig auftritt (d. h. $\tilde{p}_d(n^+) > p_d(n^+)$) sowie einen Grad $n^-$, der zu selten auftritt (d. h. $\tilde{p}_d(n^-) < p_d(n^-)$). Dann wird ein Knoten (Objekt) mit dem Grad $n^+$ und ein Knoten mit dem Grad $n^-$ gewählt. Von dem Knoten mit dem Grad $n^+$ wird eine Kante (Verbindung) entfernt und an den Knoten mit dem Grad $n^-$ angehängt. Eine Nebenbedingung ist, dass keine isolierten Knoten erzeugt werden.

2. Optimierung der Kantenlängenverteilung: Ein Schritt des "Simulated Annealing" wird mit folgender Übergangsregel durchgeführt: Durch Vergleich der aktuellen Kantenlängenverteilung $\tilde{p}_e(l)$ mit der entsprechenden Zielfunktion $p_e(l)$ erhält man eine Kantenlänge $l^+$, die zu häufig auftritt (d. h. $\tilde{p}_e(l^+) > p_e(l^+)$) sowie eine Kantenlänge $l^-$, die zu selten auftritt (d. h. $\tilde{p}_e(l^-) < p_e(l^-)$). Dann werden zwei Knoten ausgewählt, die durch eine Kante mit etwa der Länge $l^+$ verbunden sind, sowie zwei Knoten, deren räumlicher Abstand etwa $l^-$ ist. Die $l^+$-Verbindung wird entfernt und es wird eine neue Kante zwischen den beiden Knoten mit Abstand $l^-$ erzeugt. Die Nebenbedingung ist, dass keine isolierten Knoten erzeugt werden dürfen.

Beide Schritte werden solange iteriert, bis die "Cost-Function" (Kostenfunktion) einen Schwellenwert unterschreitet oder eine maximale Anzahl von Iterationen erreicht ist.

Beispielhaft setzt der Algorithmus dies wie folgt um:

In Schritt 38 werden eine oder mehrere Verbindungen zwischen den Objekten verschoben.

In Schritt 40 wird ermittelt, ob die sich hieraus ergebende Zielverteilung eine kleinere Fehlerquadratsumme (RMS<RMS_alt?) als die vorherige Zielverteilung aufweist.

Ist dies der Fall wird in Schritt 42 ein modifizierter Graph mit den neuen, angepassten Eigenschaften erzeugt und die entsprechenden Variablen des Graphen neu gesetzt:

Knotenliste = Knotenliste_neu;

Kantenliste = Kantenliste_neu;

Danach läuft der Algorithmus in die Verzweigung 44 ein.

Wurde jedoch in Schritt 40 festgestellt, dass die sich aufgrund der Änderung ergebende Zielverteilung eine größere Fehlerquadratsumme als die vorherige Zielverteilung aufweist, läuft der Algorithmus direkt in die Verzweigung 44 ein. In diesem Fall werden die Variablen des Graphen also nicht upgedatet.

In der Verzweigung 44 wird überprüft, ob eine generierte Zufallszahl kleiner ist als 0,1.

Ist dies nicht der Fall, läuft der Algorithmus direkt in die Verzweigung 52. Ist die generierte Zufallszahl kleiner als 0,1, so läuft der Algorithmus in den Schritt 46.

In Schritt 46 werden zufällige Verbindungen zwischen den Knoten erzeugt.

In Schritt 48 wird ermittelt, ob die sich hieraus ergebende Zielverteilung eine kleinere Fehlerquadratsumme (RMS<RMS_alt?) als die vorherige Zielverteilung aufweist.

Ist dies der Fall wird in Schritt 50 ein modifizierter Graph mit den neuen, angepassten Eigenschaften erzeugt und die entsprechenden Variablen des Graphen neu gesetzt:

Knotenliste = Knotenliste_neu;

Kantenliste = Kantenliste_neu;

Wurde jedoch in Schritt 48 festgestellt, dass die sich aufgrund der Änderung ergebende Zielverteilung eine größere Fehlerquadratsumme als die vorherige Zielverteilung aufweist, läuft der Algorithmus direkt in die Verzweigung 52 ein. In diesem Fall werden die Variablen des Graphen also nicht upgedatet.

In der Verzweigung 52 wird überprüft, ob eine generierte Zufallszahl kleiner ist als 0,1.

Ist dies nicht der Fall, läuft der Algorithmus direkt in die Verzweigung 30. Ist die generierte Zufallszahl kleiner als 0,1, so läuft der Algorithmus in den Schritt 54.

In Schritt 54 werden zufällige Verbindungen zwischen den Knoten gelöscht.

In Schritt 56 wird ermittelt, ob die sich hieraus ergebende Zielverteilung eine kleinere Fehlerquadratsumme (RMS<RMS_alt?) als die vorherige Zielverteilung aufweist.

Ist dies der Fall wird in Schritt 58 ein modifizierter Graph mit den neuen, angepassten Eigenschaften erzeugt und die entsprechenden Variablen des Graphen neu gesetzt:

Knotenliste = Knotenliste_neu;

Kantenliste = Kantenliste_neu;

Wurde jedoch in Schritt 56 festgestellt, dass die sich aufgrund der Änderung ergebende Zielverteilung eine größere Fehlerquadratsumme als die vorherige Zielverteilung aufweist, läuft der Algorithmus direkt in die Verzweigung 30 ein. In diesem Fall werden die Variablen des Graphen also nicht upgedatet.

Auf diese Weise läuft der Optimierungsalgorithmus wiederholt in die Verzweigung 30 ein in welcher die Verteilungen des Graphen mit den Zielverteilungen verglichen werden. Ersichtlich, ist der Optimierungsalgorithmus dahingehend eingerichtet, dass die *"Cost-Function J"* im Mittel kleiner wird, sodass der Graph nach einer bestimmten Anzahl von Iterationen soweit modifiziert wurde, dass seine Verteilungen den Zielverteilungen mit einer hinreichenden Genauigkeit entsprechen.

In diesem Fall wird der Algorithmus in Schritt 32 beendet und der modifizierte Graph als Output erzeugt und ausgegeben.

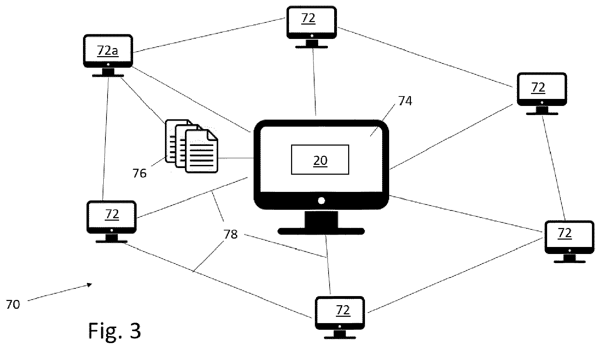

Fig. 3 zeigt ein Netzwerk 70 von Recheneinheiten 72, wobei der Algorithmus 20 zum Erzeugen des Graphen auf einer der Recheneinheiten, nämlich Rechnereinheit 74, implementiert ist. In diesem Sinne bildet die Rechnereinheit 74 ein Computersystem 74 aus, mit welchem Simulationen eines Netzwerks durchgeführt werden können, die auf dem durch den Algorithmus 20 erzeugten Graph basieren. Die Rechnereinheit 74 kann auch als Graphen-Generator bezeichnet werden.

In Fig. 3 ist schematisch auch angedeutet, wie die entsprechenden Inputdaten 76 für den Algorithmus 20 beispielsweise über Netzwerkverbindungen 78 an das Computersystem 74 übergeben werden können. Gegebenenfalls können die Inputdaten automatisiert von einer der anderen Recheneinheiten 72 des Netzwerks generiert und über den Netzwerkverbindungen 78 weitergeleitet werden. In Fig. 3 ist beispielhaft gezeigt, dass die Rechnereinheit 72a Zielverteilungsdaten automatisiert generieren und diese an das Computersystem 74 senden kann.

Das Computersystem 74 erstellt, basierend auf dem erzeugten Graph, Simulationen über beispielsweise zukünftige Zustände eines Netzwerks. Ist das Computersystem 74, wie in Fig. 3 gezeigt, selbst Bestandteil dieses Netzwerk 70, so kann das Computersystem 74 automatisiert Maßnahmen ergreifen, die gegebenenfalls zu einem Erhalt der Funktionstüchtigkeit des Netzwerks 70 beitragen. Wird beispielsweise durch die Simulation ermittelt, wie sich eine Schadsoftware innerhalb des Netzwerkes 70 ausbreitet, könnte das Computersystem 74 entsprechende Befehle senden, um infizierte Teile des Netzwerks 70 von dem restlichen Netzwerk 70 abzutrennen.

Wie vorstehend schon erläutert, können die entsprechenden Simulationen prinzipiell auf alle realen Netzwerke mit diskret verteilten Objekten angewendet werden.

**Patentansprüche**

1. Verfahren zum Erzeugen eines Graphen, wobei der erzeugte Graph Verbindungen, insbesondere logische Verbindungen, zwischen Objekten abbildet, umfassend folgende Schritte:

   • Bereitstellen einer Recheneinheit (74) mit einem Prozessor, geeignet zur Ausführung eines Algorithmus (20) zur Erzeugung eines Graphen, wobei der Algorithmus auf der Recheneinheit (74) implementiert ist;
   • Übergabe folgender Input-Daten an den Algorithmus:

      ◦ ein erstes Ausgangsmodell eines Graphen;
      ◦ eine erste Zielverteilung (76) der Objekte (72) des Graphen zu einem Zeitpunkt $T_n$, wobei die erste Zielverteilung erste Eigenschaften der Objekte (72) repräsentiert;
      ◦ einen Grenzwert GW als Abbruchkriterium beim Vergleichen von Zielverteilungen;

   • Durchführen der folgenden Schritte durch den Algorithmus:

      ◦ Berechnung einer temporären Verteilung der Objekte basierend auf dem Ausgangsmodell des Graphen;
      ◦ Vergleichen der temporären Verteilung und der ersten Zielverteilung und Berechnen eines Wertes J, wobei der Wert D einen Differenzwert der temporären Verteilung und der ersten Zielverteilung quantifiziert;
      ◦ Ausgabe des Ausgangsmodells des Graphen als erzeugter Graph $G(T_n)$, falls der Wert J den vorgegeben Grenzwert GW unterschreitet, andernfalls Abändern des Ausgangsmodells des Graphen und wiederholtes Durchführen der vorgenannten Schritte durch den Algorithmus.

2. Verfahren nach Anspruch 1, wobei das Ausgangsmodell basierend auf einem geeigneten Optimierungsalgorithmus abgeändert wird, indem Kanten zwischen den Objekten verschoben werden, zufällige Verbindungen zwischen Objekten erzeugt und/oder zufällige Verbindungen zwischen den Objekten gelöscht werden.

3. Verfahren nach einem der vorhergehenden Ansprüche, wobei der Algorithmus eingerichtet ist, Graphen zu früheren Zeitpunkten $G(T_{n-i})$, insbesondere einen Graphen $G(T_0)$ zum Zeitpunkt T=0, und/oder zu späteren Zeitpunkten $G(T_{n+i})$ basierend auf dem erzeugten Graph $G(T_n)$ zu simulieren.

4. Verfahren nach einem der vorhergehenden Ansprüche, wobei dem Algorithmus zumindest eine zweite Zielverteilung übergeben wird, wobei die zweite Zielverteilung zweite Eigenschaften der Objekte repräsentiert, wobei der Graph durch den Algorithmus basierend auf beiden Zielverteilungen angepasst wird.

5. Verfahren nach einem der vorhergehenden Ansprüche, wobei basierend auf dem erzeugten Graph $G(T_n)$ Dynamiken und/oder Ist-Zustände für folgende reale Anwendungsfälle simuliert werden:

- Ausbreitungsmuster von Infektionen bei Lebewesen;
- Ausbreitungsmuster von Schadsoftware bei Recheneinheiten;
- Ausbreitungsmuster von Internetinhalten;
- Ausbreitungsmuster von Marketingmaßnahmen;
- Robustheit von Netzwerken und/oder
- Supply Chains in Versorgungsnetzwerken.

6. Verfahren nach einem der vorhergehenden Ansprüche, wobei die Zielverteilung einen bestimmten Anwendungsfall repräsentiert.

7. Verfahren nach einem der vorhergehenden Ansprüche, wobei das Ausgangsmodell des Graphen einen gerichteten Graphen repräsentiert.

8. Verfahren nach einem der vorhergehenden Ansprüche, wobei das Ausgangsmodell des Graphen einen Multigraphen repräsentiert.

9. Verfahren nach einem der vorhergehenden Ansprüche, wobei dem Algorithmus zumindest ein weiteres Ausgangsmodell eines Graphen übergeben wird, wobei die verschiedenen Ausgangsmodelle im Hinblick auf ihre Übereistimmung mit der Zielverteilung quantifiziert werden, und dass das Ausgangsmodell mit der besseren Übereinstimmung als bevorzugtes Ausgangsmodell für die Zielverteilung markiert wird.

10. Verfahren nach Anspruch 9, wobei die Übereinstimmung im Hinblick auf eine Zusammenschau der Übereinstimmung der bekannten Zielverteilung zu verschiedenen Zeitpunkten ermittelt wird.

11. Verwendung des erzeugten Graphen zur Simulation von Dynamiken und/oder Ist-Zustände für folgende reale Anwendungsfälle, insbesondere in diskreten Ausbreitungsräumen, auf einem Computersystem:

- Ausbreitungsmuster von Infektionen bei Lebewesen;
- Ausbreitungsmuster von Schadsoftware bei Recheneinheiten;
- Ausbreitungsmuster von Internetinhalten;
- Ausbreitungsmuster von Marketingmaßnahmen;
- Robustheit von Netzwerken und/oder
- Supply Chains in Versorgungsnetzwerken.

12. Graphen-Generator zur Erzeugung eines Graphen, wobei der erzeugte Graph Verbindungen zwischen Objekten beschreibt, aufweisend eine Recheneinheit mit einem Prozessor, wobei die Recheneinheit zur Ausführung des Verfahrens nach einem der Ansprüche 1-10 eingerichtet ist.

13. Computersystem zur Simulation von Dynamiken und/oder Ist-Zustände von Netzwerken aufweisend

- einen Graphen-Generator nach Anspruch 12;
- einen Eingangskanal zum Übermitteln von Input-Daten, insbesondere von Zielverteilungen, an das Computersystem,
- einen Ausgabekanal zur Ausgabe des durch den Graphen-Generator erzeugten Graphen,

wobei das zur Computersystem Ausführung des Verfahrens nach einem der Ansprüche 1-10 eingerichtet ist und eingerichtet ist den erzeugten Graphen auszugeben und/oder mittels des erzeugten Graphen Dynamiken und/oder Ist-Zustände von Netzwerken zu simulieren.

14. Computersystem nach Anspruch 13, **dadurch gekennzeichnet, dass** das Computersystem eingerichtet ist bei der Simulation kritische Zustände für verschiedene Anwendungsfälle insbesondere in diskreten Ausbreitungsräumen, des Graphen zu detektieren, solche Anwendungsfälle umfassen:

- Ausbreitungsmuster von Infektionen bei Lebewesen;
- Ausbreitungsmuster von Schadsoftware bei Recheneinheiten;
- Ausbreitungsmuster von Internetinhalten;
- Ausbreitungsmuster von Marketingmaßnahmen;
- Robustheit von Netzwerken und/oder

• Supply Chains in Versorgungsnetzwerken.

**15.** Computersystem nach Anspruch 14, **dadurch gekennzeichnet, dass** das Computersystem in ein Netzwerk eingebunden ist und beim Erkennen der kritischen Zustände technische Maßnahmen ergreift, um eine Funktionstüchtigkeit der verschiedenen Anwendungsfälle sicherzustellen.

Fig. 1

Fig. 2

Fig. 3

**Europäisches Patentamt**
**European Patent Office**
**Office européen des brevets**

# EUROPÄISCHER RECHERCHENBERICHT

**Nummer der Anmeldung**

EP 21 16 7507

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | PEIXOTO TIAGO P.: "Inferring the mesoscale structure of layered, edge-valued, and time-varying networks", PHYSICAL REVIEW E (STATISTICAL, NONLINEAR, AND SOFT MATTER PHYSICS), Bd. 92, Nr. 4, 12. Oktober 2015 (2015-10-12), XP055834712, US ISSN: 1539-3755, DOI: 10.1103/PhysRevE.92.042807 Gefunden im Internet: URL:https://arxiv.org/pdf/1504.02381.pdf> * Zusammenfassung; Abbildungen 4,5,7,8,9 * * Teil II par.1; Seite 2 * * Seite 2, linke Spalte, letzter Absatz * * Gleichung (5); Seite 4 * * Seite 4, rechte Spalte, Absatz 1 * * Seite 6, linke Spalte, letzter Absatz * * das ganze Dokument * ----- | 1-15 | INV. G06F30/20 G06F17/18 G06Q10/04 ADD. G06F111/08 G06F113/04 |
| X | PEIXOTO TIAGO P.: "Model Selection and Hypothesis Testing for Large-Scale Network Models with Overlapping Groups", PHYSICAL REVIEW X, Bd. 5, Nr. 1, 26. März 2015 (2015-03-26), XP055834714, DOI: 10.1103/PhysRevX.5.011033 Gefunden im Internet: URL:https://arxiv.org/pdf/1409.3059.pdf> * Zusammenfassung; Abbildung 2; Tabelle 1 * * Seite 2, linke Spalte, Absatz 2 * * Teil III * * das ganze Dokument * ----- | 1-15 | **RECHERCHIERTE SACHGEBIETE (IPC)** G06F G06Q |

Der vorliegende Recherchenbericht wurde für alle Patentansprüche erstellt

| Recherchenort | Abschlußdatum der Recherche | Prüfer |
|---|---|---|
| München | 25. August 2021 | Dapp, Wolfgang |